# EUROPÄISCHE PATENTSCHRIFT

(11) **EP 2 134 982 B1**
(45) Veröffentlichungstag und Bekanntmachung des Hinweises auf die Patenterteilung: **25.01.2012**
(21) Anmeldenummer: 07785805.8
(22) Anmeldetag: 05.06.2007
(51) Int. Cl.: F16D 66/02

(54) **VERBESSERTER BREMSBELAGVERSCHLEISSSENSOR**
IMPROVED BRAKE LINING WEAR SENSOR
DETECTEUR D'USURE DE GARNITURE DE FREIN AMELIORE

(30) Priorität: 07.06.2006 DE 102006026833; 05.06.2007 DE 102007026463
(43) Veröffentlichungstag der Anmeldung: 23.12.2009
(73) Patentinhaber: Preh GmbH, 97616 Bad Neustadt a. d. Saale (DE)
(72) Erfinder: SCHMITT, Hans-Michael, 97702 Münnerstadt (DE); BLAUFUSS, Martin, 98617 Sülzfeld (DE); KNÜTTEL, Bernhard, 97616 Bad Neustadt (DE)
(74) Vertreter: Bauer, Wulf
(86) Internationale Anmeldenummer: PCT/EP2007/004975
(87) Internationale Veröffentlichungsnummer: WO 2007/140985

(56) Entgegenhaltungen:
- EP-A- 0 492 143
- EP-A- 0 566 006
- DE-A1- 3 010 498
- DE-A1- 19 817 356

## Beschreibung

Die Erfindung betrifft allgemein einen Sensor zur berührungslosen Erfassung des Verschleißes eines Bremsbelags eines Fahrzeugs, wobei die Verschleiß bedingte Verstellung des Bremsbelags gegenüber dem Bremssattel beziehungsweise der Verstellumfang einer mechanischen oder elektromechanischen Nachstellvorrichtung zur Ausgleichung des Bremsbelagverschleißes für eine nachgeschaltete, elektronische Auswert- und/oder Warneinrichtung bestimmt wird.

Derartige Systeme sind bekannt. So offenbart die DE 101 32 968 A1 ein Potentiometer mit geradliniger Widerstandsbahn, bei dem eine Verschleiß bedingte Verstellung des Bremsbelags mittels einer linearen Bewegung auf die Widerstandsbahn übertragen wird. Nachteilig erfolgt hierbei die Übertragung nicht "berührungslos", das heißt die Bewegung wird mittels mechanischer Kopplung unmittelbar auf das Potentiometer übertragen. Diese mechanische Kopplung führt dazu, dass die Trennung des Sensors von dem Bremssattel, um die Bremse zu warten oder einen Belagwechsel vorzunehmen, sofern überhaupt möglich, sehr kompliziert ist und gegebenenfalls eine Neujustierung des Sensors erforderlich macht.

Im Gegensatz dazu, offenbart die DE 196 37 394 eine "berührungslose" Messung eines Bremsbelagverschleißes. So sind ein Hallsensor an einem Bremssattel und ein Magnet am Bremskolben vorgesehen. Die durch den Verschleiß bedingte, lineare Relativverschiebung zwischen Kolben und Bremssattel wird mittels der sich dadurch ergebenden Magnetfeldänderung ermittelt. Damit ist zwar eine "berührungslose" Messung offenbart, diese zur Erleichterung der Wartung vorzusehen, wird aber nicht vorgeschlagen.

Beiden zuvor beschriebenen Ausgestaltungen ist gemeinsam, dass unmittelbar die lineare, Verschleiß bedingte Verschiebung zwischen Bremsbelag und Bremssattel bestimmt wird. Dies erfordert eine besonders hohe Detektionsgenauigkeit des Sensors beziehungsweise der damit verbundenen Messmechanik, um die vergleichsweise geringe Verschleißverstellung zuverlässig detektieren zu können.

Um die Detektionsgenauigkeit zu erhöhen, ist es daher von Vorteil, die Messung des Bremsbelagsverschleißes dadurch zu bestimmen, dass ein Getriebe vorhanden ist, dass die lineare Bewegung der Verschleiß bedingten Bremsbelagverstellung in eine Drehbewegung übersetzt, die mit besserer Auflösung zu detektieren ist, wie es z.B aus EP 0566006 bekannt ist. Dazu bietet es sich an, den Sensor an den üblicherweise vorhandenen Nachstellvorrichtungen anzubringen, da die üblichen Nachstellvorrichtungen im Allgemeinen darauf beruhen, dass eine Drehbewegung eines Motors in eine lineare Verstellung des Bremsbelags umgesetzt, insbesondere untersetzt, wird. Dabei stellt sich dem Fachmann das Problem, dass der eingeschränkte Messbereichsumfang eines Potentiometers oder eines Hallsensors die Erfassung sehr schwierig beziehungsweise unmöglich macht. In dieser Hinsicht offenbart die DE 103 05 702 eine elektromotorische Verstellung beziehungsweise Nachführung eines Bremsbelages, wobei der zugehörige Verstellmotor an einer seiner Wellen zur Erfassung seiner Drehbewegung eine Decodierscheibe mit mehreren wechselnd magnetisierten Flächen aufweist, deren Bewegung durch das Ein- und Ausschalten von mehreren Hallsensoren, das heißt digital, erfasst wird. Da kein Detektionssignal erzeugt wird, das in eindeutiger Weise der jeweiligen, durch die Drehbewegung hervorgerufenen Stellung entspricht, ist eine vergleichsweise aufwendige Auswertlogik erforderlich und es bedarf einer aufwendigen Neujustage bei der Wartung, insbesondere nach dem Belagswechsel.

Es ist daher Aufgabe der vorliegenden Erfindung, eine Vorrichtung zur Messung der Verschleiß bedingten Verstellung eines Bremsbelags gegenüber einem zugehörigen Bremssattel bereitzustellen, die vergleichsweise preiswert ist, die wartungsfreundlich und die eine vergleichsweise genaue und zuverlässige Messung ermöglicht. Diese Aufgabe wird durch eine Vorrichtung gemäß Anspruch 1, beziehungsweise eine Bremse und ein Fahrzeug gemäß dem Anspruch 6 beziehungsweise 7 gelöst.

Ein zugehöriges Messverfahren ist Gegenstand des nebengeordneten Verfahrensanspruchs. Die Unteransprüche betreffen jeweils vorteilhafte Ausgestaltungen.

Die erfindungsgemäße Vorrichtung zur Messung der Verschleiß bedingten Verstellung eines Bremsbelags gegenüber einem zugehörigen Bremssattel umfasst ein Getriebe zur Übersetzung der Verschleiß bedingten Verstellung in eine Drehbewegung. Durch diese Umwandlung der im Allgemeinen linearen, aber vor allem geringen Relativverstellung beziehungsweise -verschiebung zwischen Belag und Sattel in eine Drehbewegung wird eine genauere Erfassung durch den ferner erfindungsgemäß vorgesehenen Sensor ermöglicht. Dies liegt einerseits daran, dass eine Drehbewegung leichter zu erfassen ist und andererseits daran, dass das Untersetzungsverhältnis leicht so eingestellt werden kann oder ist, dass die vergleichsweise geringe lineare Bewegung mit einem vergleichsweise großen Drehausschlag einhergeht. Zur berührungslosen Übertragung der Drehbewegung auf den Sensor ist eine berührungslose Kopplung, beispielsweise eine auf magnetischen Kräften beruhende Kupplung, vorgesehen. Beispielsweise kann die Kopplung durch ein auf den Sensor einwirkendes elektromsgnetisches Feld erreicht werden, dessen auf der Belagverstellung beruhenden Änderung durch den Sensor detektiert wird, beispielsweise mittels des Hallprinzips. Dadurch wird erreicht, dass keine mechanische Verbindung zwischen dem Sensor und dem die Drehbewegung erzeugenden Mittel erforderlich ist. Dies erleichtert die Wartung, da es keiner mechanischen Trennung dieser Verbindung bedarf. Beispielsweise ist der Sensor in einem an dem Bremssattel lösbar befestigten Gehäuse angeordnet und die berührungslose Kopplung erfolgt im Übergangsbereich zwischen diesem Gehäuse und dem Bremssattel. Aufgrund der berührungslosen Kopplung bedarf es weder irgendwelcher mechanischer Verbindungsmittel, wie Kupplungen, noch sind zu diesem Zweck Durchbrüche in dem Bremssattel beziehungsweise dessen Gehäuse noch in dem Gehäuse des Sensors vorzusehen. Dadurch wird die Wartung erleichtert. Ferner kann ein Sensor leicht nachgerüstet werden. Ferner wird das Gehäuse des Bremssattels nicht geschwächt oder aufgrund des ansonsten vorzusehenden Durchbruchs nicht einer Verschmutzung ausgesetzt. Zudem kann der Sensor so nahezu "rückstandslos", das heißt ohne verbleibende Durchbrüche im Bremssattel von diesem bei Bedarf entfernt werden.

Die Vorrichtung ist ferner erfindungsgemäß so ausgestaltet, dass der Sensor ein analoges oder pulsweitenmoduliertes Detektionssignal zur Bestimmung der Verschleiß bedingten Verstellung des Bremsbelags erzeugt, wobei dieses der jeweiligen durch die Drehbewegung hervorgerufenen Stellung entspricht. Durch die Verwendung eines pulsweitenmodulierten, insbesondere eines analogen Signals vereinfacht sich der Auswertungsaufwand erheblich. Dadurch ist der Sensor zudem leicht zu justieren, preiswert herzustellen und ist besonders zuverlässig. Dies liegt unter anderem daran, dass nach einem zwischenzeitlichen Stromausfall oder einer störenden Stromschwankung kein erneuter Kalibrierungsprozess, wie im Allgemeinen bei einer digitalen Erfassung, erforderlich ist. Vorteilhaft ist die Vorrichtung so ausgestaltet, dass lediglich ein Sensor benötigt wird, um die Erfassung der Verstellung zu erfassen, dadurch kann die Vorrichtung preiswert hergestellt werden.

In einer vorteilhaften Ausgestaltung der erfindungsgemäßen Vorrichtung handelt es sich bei dem Sensor um ein Drehpotentiometer und die berührungslose Kopplung ist eine auf magnetischen Kräften beruhende Kupplung, wobei beispielsweise eine sich der Verstellbewegung des Belags entsprechend drehende Welle des Getriebes mit einem Gebermagneten versehen ist, der einen sensorseitigen Nehmermagneten, der drehbar gelagert ist, mitnimmt. Die Drehbewegung wird auf das Drehpotentiometer übertragen. Wobei der jeweils eingestellte Widerstand der Verstellung des Bremsbelags entspricht und durch ein zugehöriges Detektionssignal detektierbar ist.

Der Einstellumfang des Drehpotentiometers beziehungsweise das Getriebe ist dabei auf den maximal zu erwartenden Verstellumfang des Bremsbelags abgestimmt. Dadurch wird eine besonders preiswert herzustellende und besonders zuverlässige Vorrichtung geschaffen, die insbesondere unanfällig gegenüber magnetischen Fremdfeldern ist.

Gemäß einer weiteren Ausführungsform, zur vorgenannten alternativen Ausführungsform, ist der Sensor ein Hallsensor und die berührungslose Kopplung erfolgt durch ein sich durch die Drehbewegung änderndes magnetisches Feld, das auf den Hallsensor einwirkt. Beispielsweise handelt es sich um einen AMR-Sensor, aufgrund der geringeren Störanfälligkeit bevorzugt um einen GMR-Sensor. Noch bevorzugter handelt es sich um einen Hallsensor mit frei programmierbarer Transferfunktion zwischen Eingangsmagnetfeld und ausgegebenem Detektionssignal, welcher besonders zuverlässig ist und aufgrund der programmierbaren Transferfunktion leicht zu justieren ist.

Beispielsweise ist ein Gebermagnet an der endständigen Welle des Getriebes angeordnet. Dessen Magnetfeld wirkt auf den Hallsensor ein. Bei einer durch den Verschleiß bedingten Verstellung kommt es wenigstens zu einer Verdrehung des Magneten und des zugehörigen Magnetfeldes gegenüber der Ausrichtung des Hallsensors was mit einer Änderung der Hallspannung, gegebenenfalls auch einem Vorzeichenwechsel der Hallspannung im Sensor einhergeht. Sind Hallsensor und Magnet nicht koaxial zueinander ausgerichtet, kommt es neben der Drehung auch zu einer Entfernung zwischen Magnet und Sensor, was ebenfalls zur Änderung der Hallspannung führt und in einer Ausführungsform zur Detektion genutzt wird. Mit einer derartigen Ausgestaltung kann eine zuverlässige, weil verschleißarme, langzeitstabile und temperaturunempfindliche Vorrichtung geschaffen werden. Getriebe und Haiisensor sind so angeordnet und ausgelegt, dass den vom Hallsensor erfassbare Bereich der Magnetfeldausrichtung, 120° bei einem Standard-Hallsensor, 180° bei einem GMR- oder AMR-Hallsensor möglichst weitreichend und damit die Messgenauigkeit optimierend ausgenutzt werden kann.

Bei einer weiteren vorteilhaften Ausgestaltung ist jeder durch den Verschleiß bedingten Verstellung des Bremsbelags eindeutig ein analoger Signalwert des Sensors zugeordnet. Dadurch können Kalibrierungsvorgänge vorteilhaft entfallen.

Bei einer weiteren vorteilhaften Ausführungsform ist das Getriebe zumindest ein Teil einer mechanischen oder elektromechanischen Nachstellvorrichtung des Bremsbelags. Diese Nachstellvorrichtungen sind nahezu bei sämtlichen Fahrzeugen vorhanden und weisen im Allgemeinen sich drehende Wellen auf. Daher lassen sich die bekannten Bremsen leicht durch die erfindungsgemäße Vorrichtung nachrüsten, ohne dass dadurch die Integrität der Bremse aus den eingangs genannten Gründen beeinträchtigt wird. Beispielsweise umfasst die Nachstellvorrichtung ein elektromotorisch oder mechanisch angetriebenes Kettengetriebe aus Ritzel und Kette.

Bei einer weiteren vorteilhaften Ausgestaltung umfasst die Vorrichtung zur Messung der Verschleiß bedingten Verstellung ein zusätzliches Untersetzungsgetriebe zwischen dem Getriebe, beispielsweise der Nachstellvorrichtung, und dem Sensor. Dieses Untersetzungsgetriebe dient der Anpassung des der Verstellung zugehörigen Drehumfangs des Getriebes, beispielsweise des Gebermagneten an den vom Sensor erfassbaren Messbereich. Um den Platzbedarf für dieses Untersetzungsgetriebe gering zu halten, handelt es sich bevorzugt um ein Planetengetriebe. Das Untersetzungsgetriebe ist beispielsweise beim Drehpotentiometer sensorseitig, das heißt zwischen der magnetischen Kupplung und dem Sensor, das heißt dem Drehpotentiometer angeordnet; bei einer Ausführungsform mit Hallsensor ist das Untersetzungsgetriebe bremssattelseitig, das heißt zwischen dem Getriebe der Nachstellvorrichtung und dem das Magnetfeld erzeugenden Magneten angeordnet.

In einer weiteren, vorteilhaften Ausgestaltung sind der Sensor und gegebenenfalls das Untersetzungsgetriebe in einem mit dem Bremssattel lösbar verbindbaren Gehäuse angeordnet, wobei die berührungslose Kopplung der Übertragung der Drehbewegung in das Gehäuse dient. Durch die lösbäre Verbindung, das heißt den dadurch erreichten modularen Aufbau, wird eine einfache Wartung gewährleistet. Aufgrund der berührungslosen Kopplung bedarf es dafür keiner Verbindung zwischen Bremssattel und Sensor und somit auch keiner zusätzlicher Durchbrüche in dem Bremssattelgehäuse. Die Herstellungskosten des Bremssattelgehäuses werden, wenn überhaupt, nur unwesentlich nachteilig beeinflusst. Zudem wird die Nachrüstung mit der erfindungsgemäßen Vorrichtung erleichtert. Da keine Durchbrüche im Bremssattelgehäuse vorzunehmen sind, werden dessen Stabilität und Schutz vor Außeneinwirkung, wie Regenwasser usw. nicht beeinträchtigt.

Die Erfindung betrifft ferner eine Bremse für ein Kraftfahrzeug, bevorzugt für ein Nutzfahrzeug sowie ein Kraftfahrzeug, die beziehungsweise das mit der zuvor erläuternden Vorrichtung ausgerüstet ist. Die vorrichtungsbedingten Vorteile betreffen somit ebenfalls die Bremse beziehungsweise das Fahrzeug.

Die Erfindung betrifft ferner ein Verfahren zur Messung der Verschleiß bedingten Verstellung eines Bremsbelags gegenüber einem zugehörigen Bremssattel, wobei mittels eines Getriebes die Verschleiß bedingte Verstellung in eine Drehbewegung umgesetzt wird. Die Drehbewegung wird durch eine berührungslose Kopplung an den Sensor zur Erfassung der Drehbewegung übertragen. Das Verfahren zeichnet sich dadurch aus, dass der Sensor ein analoges oder pulsweitenmoduliertes Detektionssignal zur Bestimmung der Verschleiß bedingten Verstellung des Bremsbelags erzeugt, wobei das Detektionssignal der jeweiligen durch die Drehbewegung hervorgerufenen Verstellung entspricht. Durch diese Umwandlung der im Allgemeinen linearen, aber vor Allem geringen Relativverstellung beziehungsweise -verschiebung zwischen Bremssattel und Bremsbelag in eine Drehbewegung wird eine genauere Erfassung durch den ferner erfindungsgemäß vorgesehenen Sensor ermöglicht. Dies liegt einerseits daran, dass eine Drehbewegung leichter zu erfassen ist und andererseits daran, dass das Untersetzungsverhältnis leicht so eingestellt werden kann oder ist, dass die vergleichsweise geringe lineare Bewegung mit einem vergleichsweise großen Drehausschlag einhergeht. Durch die berührungslose Kopplung wird erreicht, dass keine mechanische Verbindung zwischen dem Mittel und dem die Drehbewegung erzeugenden Sensor erforderlich ist. Dies erleichtert die Wartung, da es keiner mechanischen Trennung dieser Verbindung bedarf, um den Sensor vom Bremssattel zu trennen.

In einer vorteilhaften Ausgestaltung des Verfahrens wird das Detektionssignal ferner ausgewertet, um eine Warnung auszugeben und/oder die Bremssteuerung zu beeinflussen. Das analoge oder pulsweitenmodulierte Detektionssignal kann zur Erhöhung der Störsicherheit einer zusätzlichen Bearbeitung durch eine Über-spannungs-, ESD- und/oder EMV-Schutzschaltung unterzogen werden, bevor es der eigentlichen Auswerteinheit zugeführt wird. Derartige Schaltungen sind beispielsweise in Hallsensoren der neuesten Bauart integriert.

In den beigefügten Figuren sind bevorzugte Ausführungsformen der erfindungsgemäßen Vorrichtung zur Messung der Verschleiß bedingten Verstellung eines Bremsbelages dargestellt, ohne die Erfindung darauf zu beschränken. Es zeigt
- Figur 1: eine perspektivische Explosionsdarstellung einer ersten Ausführungsform der erfindungsgemäßen Vorrichtung mit dem zugehörigen Bremssattel,
- Figur 2: eine perspektivische Explosionsdarstellung einer zweiten Ausführungsform der erfindungsgemäßen Vorrichtung mit dem zugehörigen Bremssattel und
- Figur 3: eine Schnittdarstellung der in Figur 2 gezeigten Ausführungsform.

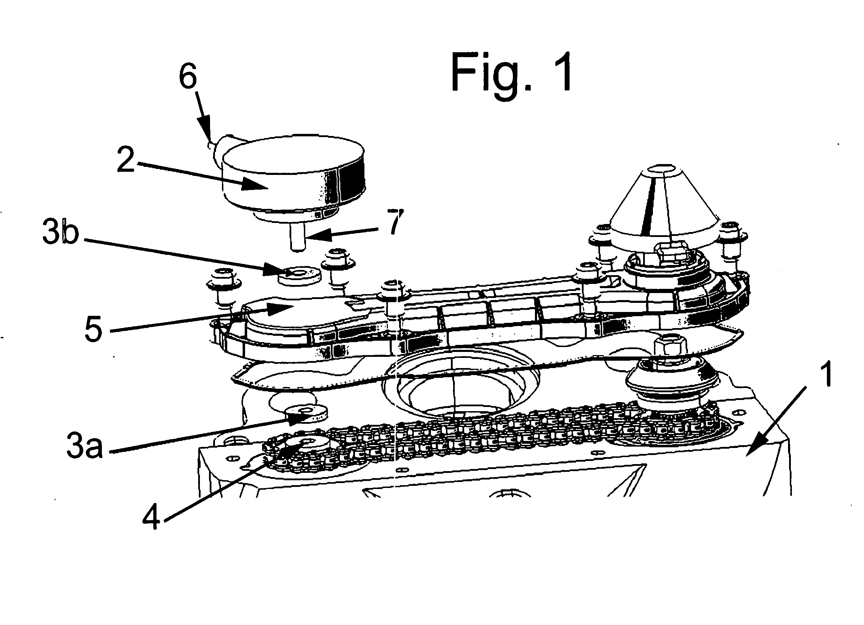

In Figur 1 ist ein Bremssattel 1 mit einer daran gezeigten mechanischen Nachstellvorrichtung, die auch als elektromechanische Nachstellvorrichtung ausführbar ist, mit einem Getriebe 4 aus Kette und Ritzeln zur Ausgleichung des Bremsbelagverschleißes. Der Bremsbelag sowie der zugehörige Betätigungs-zylinder sind aus Gründen der Klarheit nicht dargestellt. Das Getriebe 4 umfasst eine im Bereich des Pfeils 4 gezeigte Welle, die sich proportional zur Verschleiß bedingten Verstellung des Bremsbelags gegenüber dem Bremssattel verstellt. Diese Drehung wird auf einen Sensor 2 übertragen, dazu ist eine berührungslose Kopplung aus einem Magnetenpaar 3a, 3b vorgesehen. Dabei ist das Gebermagnet 3a an der Welle angebracht und dessen magnetische Kraft wirkt durch das Gehäuse 5 des Bremssattels beziehungsweise der Nachstellvorrichtung auf einen außerhalb des Gehäuses 5 angeordneten Nehmermagnet 3b, der seinerseits an einer drehbeweglichen Welle 7 angebracht ist. Die magnetische Kupplung aus den Magneten 3a und 3b sorgt für eine Übertragung der Drehung des Getriebes 4 der Nachstellvorrichtung 4 auf die Welle 7 des Sensors 2. Bei dem Sensor 2 handelt es sich um ein in einem Gehäuse integriertes Drehpotentiometer, das mittels der drehbeweglichen Welle 7 verstellt wird. Zur Anpassung des Umfangs der Drehbewegung der Nachstellvorrichtung 4 an den möglichen Drehumfang des Potentiometers ist optional ein Untersetzungsgetriebe (nicht dargestellt) vorgesehen, das in dem Gehäuse des Sensors 2 integriert ist und die Drehung der Nachstellvorrichtung 4 bei der Übertragung auf das Drehpotentiometers des Sensors 2 untersetzt. Das Drehpotentiometer ist über den Anschluss 6 mit einer Auswerteinheit (nicht dargestellt) verbunden. Da das Drehpotentiometer des Sensors 2 einen drehstellungsabhängigen Widerstand aufweist, kann dies leicht zur Erzeugung eines analogen, der Drehstellung entsprechenden Detektionssignals (-Spannung oder -Strom) verwendet werden.

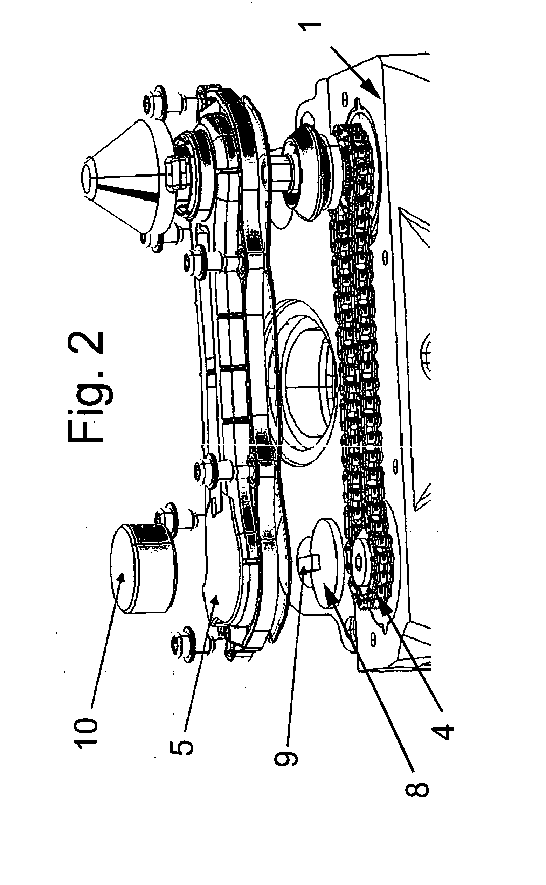

In Figur 2 ist eine weitere Ausführungsform der erfindungsgemäßen Vorrichtung zur Anbringung an dem aus Fig. 1 bekannten Bremssattel 1 mit einer daran gezeigten mechanischen Nachstellvorrichtung mit einem Getriebe 4 aus Kette und Ritzeln zur Ausgleichung des Bremsbelagverschleißes dargestellt. Wiederum sind der Bremsbelag sowie der zugehörige Betätigungszylinder aus Gründen der Klarheit nicht dargestellt. Das Getriebe 4 umfasst eine im Bereich des Pfeils 4 gezeigte Welle, die sich proportional zur Verschleiß bedingten Verstellung des Bremsbelags gegenüber dem Bremssattel verstellt. Diese Drehung wird auf einen Sensor 10 übertragen. Zur Anpassung des Umfangs der Drehbewegung der Nachstellvorrichtung 4 an den durch den Sensor 10 messbaren Drehumfang ist ein Untersetzungsgetriebe 8 vorgesehen, das in dem Gehäuse 5 des Bremssattels 1 beziehungsweise der Nachstellvorrichtung 4 integriert ist. Es handelt sich um ein Planetengetriebe. Dadurch wird die Drehung der Welle der Nachstellvorrichtung 4 bei der Übertragung zum Sensor 10 untersetzt. Zur berührungslosen Kopplung ist ein Magnet 9 an dem Untersetzungsgetriebe 8 so angebracht, dass er sich entsprechend des Untersetzungsverhältnisses zur Drehung der Nachstellvorrichtung 4 dreht. Das Magnetfeld des Magneten 9 wirkt durch das Gehäuse 5 des Bremssattels beziehungsweise der Nachstellvorrichtung auf den außerhalb des Gehäuses 5 angeordneten Sensor 10, bei dem es sich um einen Hall-Sensor handelt. Das sich durch die Bewegung ändernde Magnetfeld bewirkt eine Änderung der Hallspannung in dem Hallsensor. Mit zunehmender Entfernung nimmt die Stärke des Magnetfelds und damit die zugehörige Hallspannung ab. Ebenso kann eine Veränderung der Ausrichtung des Magnetfelds durch die Drehung gegenüber dem Sensor eine Veränderung der Hallspannung unter anderem auch im Vorzeichen bewirken. Der Fachmann ist in der Lage in wenigen Versuchen, eine optimale Ausrichtung zwischen Magnet, das heißt Magnetfeld und Sensor zu erreichen, um eine eindeutige Zuordnung zwischen Drehstellung und Detektionssignal des Sensors zu erreichen.

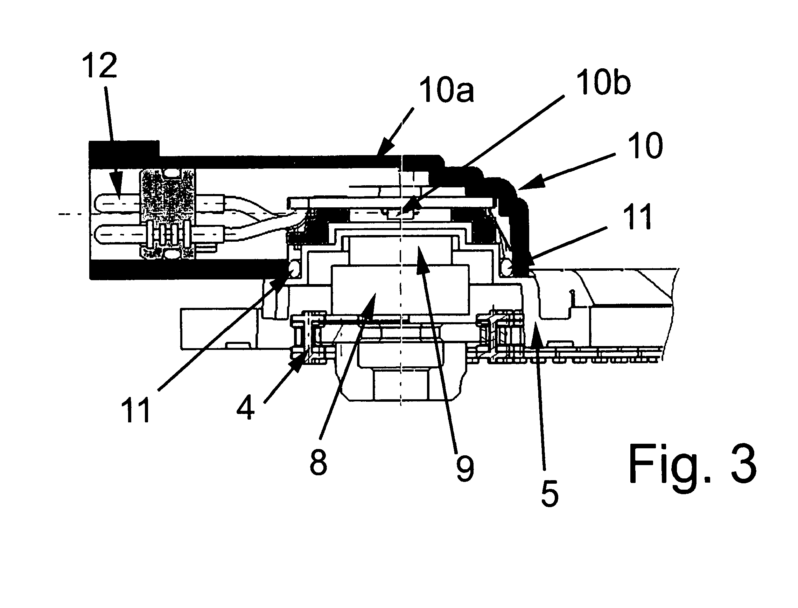

Figur 3 zeigt die in Figur 2 gezeigte Ausführungsform in Schnittdarstellung. Hierbei wird der Aufbau des Sensors 10 und dessen Anbringung an dem Gehäuse 5 des Bremssattels beziehungsweise der Nachstellvorrichtung 4 deutlich. Der Sensor 10 weist ein in einem Gehäuse 10a angeordneten Hallsensor 10b auf, auf den das Magnetfeld des Magneten 9 durch das Gehäuse 5 hindurch einwirkt. Der Magnet 9 dreht sich proportional zur Welle der Nachstellvorrichtung 4 aber untersetzt durch das Untersetzungsgetriebe 8, bei dem es sich aus Platzgründen um ein Planetengetriebe handelt. Der Sensor 10 ist über die in das Gehäuse 10a des Sensors integrierten Steckkontakte 12 mit einer Auswerteinheit verbindbar. Der Sensor 10 ist mit dem Bremssattel beziehungsweise der Nachstellvorrichtung 4 lediglich über die mechanische Verbindung zwischen Sensorgehäuse 10a und Gehäuse 5 verbunden, indem es daran aufgesetzt und mittels einer O-Ring Dichtung 11 abgedichtet wird. Das erleichtert die Wartung und die Justage.

## Patentansprüche

1. Vorrichtung zur Messung der Verschleiß bedingten Verstellung eines Bremsbelags gegenüber einem zugehörigen Bremssattel, umfassend ein Gehäuse (5) des Bremssattels, ein Getriebe (4) zur Übersetzung der Verschleiß bedingten Verstellung in eine Drehbewegung, mit einem Sensor (2, 10) zur Erfassung der Drehbewegung, wobei eine berührungslose Kopplung (3a, 3b, 9) zur Übertragung der Drehbewegung auf den Sensor (2, 10) vorgesehen ist, wobei die Vorrichtung so ausgestaltet ist, dass der Sensor (2, 10) in einem mit dem Gehäuse (5) des Bremssattels lösbar verbindbaren Gehäuse (10a) des Sensors (2, 10) angeordnet ist und ein analoges oder pulsweitenmoduliertes Detektionssignal zur Bestimmung der Verschleiß bedingten Verstellung des Bremsbelags erzeugt, wobei das Detektionssignal der jeweiligen durch die Drehbewegung hervorgerufenen Verstellung entspricht, **dadurch gekennzeichnet, dass** die berührungslose Kopplung im Übergangsbereich zwischen dem Gehäuse (5) des Bremssattels und dem Gehäuse (10a) des sensors (2, 10) erfolgt, dass im Gehäuse (5) des Bremssattels zum Zwecke der Kopplung keine Durchbrüche vorgesehen sind,
und dass entweder der Sensor (2) ein Drehpotentiometer ist und die berührungslose Kopplung eine auf magnetischen Kräften beruhende Kupplung (3a, 3b) ist,
oder der Sensor (10) ein Hallsensor (10b) ist und die berührungslose Kopplung durch ein sich durch die Drehbewegung änderndes magnetisches Feld (9), das auf den Hallsensor einwirkt, erfolgt.

2. Vorrichtung gemäß Anspruch 1, **dadurch gekennzeichnet, dass** jeder Verschleiß bedingten Verstellung des Bremsbelags eindeutig ein analoger Signalwert des Sensors (2, 10) zugeordnet ist.

3. Vorrichtung gemäß einem der vorhergehenden Ansprüche, **dadurch gekennzeichnet, dass** das Getriebe (4) wenigstens Teil einer mechanischen oder elektromechanischen Nachstellvorrichtung des Bremsbelags ist.

4. Vorrichtung gemäß einem der vorhergehenden Ansprüche, **dadurch gekennzeichnet, dass** ein zusätzliches Untersetzungsgetriebe (8), bevorzugt ein Planetengetriebe, zwischen Getriebe (4), beispielsweise der Nachstellvorrichtung, und Sensor (10) vorhanden ist.

5. Vorrichtung gemäß Anspruch 4, **dadurch gekennzeichnet, dass** das Untersetzungsgetriebe (8) in dem mit dem Gehäuse (5) des Bremssattels lösbar verbindbaren Gehäuse (10a) des Sensors (2, 10) angeordnet ist.

6. Bremse für ein Kraftfahrzeug, bevorzugt Nutzfahrzeug, **gekennzeichnet, durch** eine Vorrichtung zur Messung der Verschleiß bedingten Verstellung eines Bremsbelags gemäß einem der vorhergehenden Ansprüche.

7. Kraftfahrzeug **gekennzeichnet durch** eine Bremse gemäß dem vorhergehenden Anspruch.

8. Verfahren zur Messung der Verschleiß bedingten Verstellung eines Bremsbelags gegenüber einem zugehörigen Bremssattel, wobei mittels eines Getriebes die Verschleiß bedingte Verstellung in eine Drehbewegung umgesetzt wird, die Drehbewegung durch eine berührungslose Kopplung an den Sensor zur Erfassung der Drehbewegung übertragen wird, wobei der Sensor in einem mit dem Bremssattel lösbar verbindbaren Gehäuse (10a) angeordnet ist und ein analoges oder pulsweitenmoduliertes Detektionssignal zur Bestimmung der Verschleiß bedingten Verstellung des Bremsbelags erzeugt, wobei das Detektionssignal der jeweiligen durch die Drehbewegung hervorgerufenen Verstellung entspricht, **dadurch gekennzeichnet, dass** die berührungslose Kopplung im Übergangsbereich zwischen einem Gehäuse (5) des Bremssattels und dem Gehäuse (10a) des Sensors, und dass zur berührungslosen Kopplung ein Magnet (3a, 9) an einer Welle des Getriebes angebracht ist und dass im Gehäuse (5) des Bremssattels zum Zwecke der Kopplung keine Durchbrüche vorgesehen sind.

9. Verfahren nach Anspruch 8, **dadurch gekennzeichnet, dass** das Detektionssignal ferner ausgewertet wird, um eine Warnung auszugeben und/oder die Bremssteuerung zu beeinflussen.

## Claims

1. Device for measuring the wear-induced displacement of a brake lining with respect to an associated brake calliper, comprising a housing (5) of the brake calliper, a transmission (4) for translating the wear-induced displacement into a rotary motion, with a sensor (2, 10) for detecting the rotary motion, wherein a contactless coupling (3a, 3b, 9) for communicating the rotary motion to the sensor (2, 10) is provided, the device being configured in such a way that the sensor (2, 10) is disposed in a housing (10a) of the sensor (2, 10) that is detachably connected to the housing (5) of the brake calliper and generates an analogue or pulse-width modulated detection signal for determining the wear-induced displacement of the brake lining, the detection signal corresponding to a respective displacement produced by the rotary motion, **characterised in that** the contactless coupling takes place in the transitional area between the housing (5) of the brake calliper and the housing (10a) of the sensor, that no through-holes are provided in the housing (5) of the brake calliper for the purpose of coupling,
and that either the sensor (2) is a rotary potentiometer and the contactless coupling is a clutch (3a, 3b) based on magnetic forces,
or the sensor (10) is a Hall sensor (10b) and the contactless coupling takes place due to a magnetic field (9) that changes as a result of the rotary motion and acts on the Hall sensor.

2. Device according to claim 1, **characterised in that** each wear-induced displacement is uniquely associated with an analogue signal value of the sensor (2, 10).

3. Device according to any one of the preceding claims, **characterised in that** the transmission (4) is at least a part of a mechanical or electromechanical adjusting device of the brake lining.

4. Device according to any one of the preceding claims, **characterised in that** an additional reduction gear (8), preferably a planetary gear, is present between the transmission (4), for example the adjusting device, and the sensor (10).

5. Device according to claim 4, **characterised in that** the reduction gear (8) is disposed in the housing (10a) of the sensor (2, 10) that is detachably connected to the housing (5) of the brake calliper.

6. Brake for a motor vehicle, preferably a commercial vehicle, **characterised by** a device for measuring the wear-induced displacement of a brake lining according to any one of the preceding claims.

7. Motor vehicle, **characterized by** a brake according to the preceding claim.

8. Method for measuring the wear-induced displacement of a brake lining with respect to an associated brake calliper, wherein the wear-induced displacement is translated into a rotary motion by means of a transmission, the rotary motion is communicated to the sensor for detecting the rotary motion by means of a contactless coupling, wherein the sensor is disposed in a housing (10a) that is detachably connected to the brake calliper and generates an analogue or pulse-width modulated detection signal for determining the wear-induced displacement of the brake lining, the detection signal corresponding to the respective displacement produced by the rotary motion, **characterised in that** the contactless coupling takes place in the transitional area between a housing (5) of the brake calliper and the housing (10a) of the sensor, and that a magnet (3a, 9) is attached to a shaft of the transmission for contactless coupling, and that no through-holes are provided in the housing (5) of the brake calliper for the purpose of coupling.

9. Method according to claim 8, **characterised in that** the detection signal is additionally evaluated in order to emit a warning and/or to influence the brake control system.

## Revendications

1. Dispositif de mesure du déréglage dû à l'usure, d'une garniture de frein par rapport à un étrier de frein associé, comprenant un boîtier (5) de l'étrier, une transmission (4) pour transformer le déréglage dû à l'usure en un mouvement de rotation, avec un détecteur (2, 10) destiné à détecter le mouvement de rotation, un couplage sans contact (3a, 3b, 9) étant prévu pour la transmission du mouvement de rotation au détecteur (2, 10), le dispositif étant réalisé de manière à ce que ledit détecteur (2, 10) soit disposé dans un boîtier (10a) du détecteur (2, 10), apte à être relié de façon amovible au boîtier (5) de l'étrier et génère un signal de détection analogique ou modulé en largeur d'impulsion pour déterminer le déréglage de la garniture de frein qui est dû à l'usure, ledit signal de détection correspondant au déréglage respectif provoqué par le mouvement de rotation, **caractérisé par le fait que** ledit couplage sans contact se fait dans la zone de transition entre le boîtier (5) de l'étrier et le boîtier (10a) du détecteur (2, 10), que le boîtier (5) de l'étrier ne présente pas de percées à des fins du couplage, et que soit ledit détecteur (2) est un potentiomètre rotatif et le couplage sans contact est un couplage (3a, 3b) basé sur des forces magnétiques, soit le détecteur (10) est un capteur à effet Hall (10b) et le couplage sans contact se fait par un champ magnétique (9) variant en raison du mouvement de rotation et qui agit sur ledit capteur à effet Hall.

2. Dispositif selon la revendication 1, **caractérisé par le fait qu'**à chaque déréglage de la garniture de frein qui est dû à l'usure est associée clairement une valeur de signal analogique du détecteur (2, 10).

3. Dispositif selon l'une quelconque des revendications précédentes, **caractérisé par le fait que** ladite transmission (4) est au moins une partie d'un dispositif mécanique ou électromécanique de rajustage de la garniture de frein.

4. Dispositif selon l'une quelconque des revendications précédentes, **caractérisé par le fait qu'**il y a un démultiplicateur (8) supplémentaire, de préférence un engrenage planétaire, entre ladite transmission (4), par exemple le dispositif de rajustage, et ledit détecteur (10).

5. Dispositif selon la revendication 4, **caractérisé par le fait que** ledit démultiplicateur (8) est disposé dans ledit boîtier (10a) du détecteur (2, 10), apte à être relié de façon amovible au boîtier (5) de l'étrier.

6. Frein pour un véhicule automobile, de préférence un véhicule utilitaire, **caractérisé par** un dispositif de mesure du déréglage d'une garniture de frein qui est dû à l'usure, selon l'une quelconque des revendications précédentes.

7. Véhicule automobile **caractérisé par** un frein selon la revendication précédente.

8. Procédé de mesure du déréglage dû à l'usure, d'une garniture de frein par rapport à un étrier de frein associé, dans lequel le déréglage dû à l'usure est transformé en un mouvement de rotation par l'intermédiaire d'une transmission, le mouvement de rotation est transmis par un couplage sans contact au détecteur destiné à détecter le mouvement de rotation, le détecteur étant disposé dans un boîtier (10a) apte à être relié de façon amovible à l'étrier et générant un signal de détection analogique ou modulé en largeur d'impulsion pour déterminer le déréglage de la garniture de frein qui est dû à l'usure, ledit signal de détection correspondant au déréglage respectif provoqué par le mouvement de rotation, **caractérisé par le fait que** ledit couplage sans contact se fait dans la zone de transition entre un boîtier (5) de l'étrier et le boîtier (10a) du détecteur et que, pour le couplage sans contact, un aimant (3a, 9) est monté sur un arbre de la transmission et que le boîtier (5) de l'étrier ne présente pas de percées à des fins du couplage.

9. Procédé selon la revendication 8, **caractérisé par le fait que** ledit signal de détection est en outre évalué afin de lancer une alerte et/ou d'influer sur la commande du frein.
